# FASCICULE DE BREVET EUROPEEN

(11) **EP 2 070 749 B1**
(45) Date de publication et mention de la délivrance du brevet: **01.12.2010**
(21) Numéro de dépôt: 08170726.7
(22) Date de dépôt: 04.12.2008
(51) Int. Cl.: B60J 5/04, B62D 25/04

(54) **Dispositif anti-échappement d'un ouvrant latéral de véhicule automobile en cas de choc frontal**
Haltevorrichtung eines seitlichen Öffnungselements eines Kraftfahrzeugs im Fall eines Frontalzusammenstoßes
Device for preventing the release of a side door of an automobile in the event of a frontal crash

(30) Priorité: 10.12.2007 FR 0759686
(43) Date de publication de la demande: 17.06.2009
(73) Titulaire: Peugeot Citroën Automobiles Société Anonyme, 78140 Velizy Villacoublay (FR)
(72) Inventeur: Cheron, Michel, 90000 Belfort (FR)

(56) Documents cités:
- EP-A- 1 564 050
- FR-A- 2 221 299

## Description

La présente invention est relative à un dispositif anti-échappement d'un ouvrant latéral par rapport à une caisse de véhicule automobile en cas de choc frontal, ladite caisse comprenant un pied, qui forme une structure en caisson allongée sensiblement verticalement, ledit ouvrant latéral comprenant une peau extérieure, une doublure fixée intérieurement à la peau et une frise de renfort sensiblement horizontale, et étant apte à se déplacer entre une position ouverte et une position fermée par rapport à la caisse.

L'invention concerne également un véhicule automobile équipé d'un tel dispositif.

Fréquemment, la caisse du véhicule comprend de chaque côté un pied avant, un pied milieu et un pied arrière.

Lors d'un choc frontal à une vitesse relativement élevée, la partie avant du véhicule commence par se déformer, puis l'habitacle subit les efforts longitudinaux vers l'arrière dus au choc. Sous l'effet de ces efforts, la caisse du véhicule se comprime de sorte que les pieds tendent à se rapprocher. Les pieds avant, milieu et arrière sont réalisés au moyen d'un procédé d'emboutissage qui ne leur permet pas de s'étendre perpendiculairement à l'extrémité de la frise de renfort d'un ouvrant. En fait, chaque pied comprend une partie d'inclinaison par rapport à l'extrémité de la frise de renfort de l'ouvrant, qui est inclinée d'un angle de quelques degrés par rapport à un plan transversal au véhicule. Par conséquent, cet angle forme une rampe le long de laquelle l'extrémité de la frise de porte est destinée à glisser vers l'extérieur, lors d'un choc frontal. La distance, suivant la direction transversale, entre l'extérieur de la frise de renfort de l'ouvrant et l'extérieur du pied correspondant diminue alors, entraînant un risque d'échappement de la frise.

Pour limiter ce risque d'échappement, la distance, suivant la direction transversale, entre l'extérieur de la frise et l'extérieur du pied correspondant, également appelée recouvrement transversal entre la frise et le pied, est fréquemment importante.

Toutefois, l'augmentation du recouvrement transversal entre la frise et le pied réduit faiblement les risques d'échappement de la frise par rapport au pied et entraîne en outre des contraintes dimensionnelles lors de la conception du véhicule.

Le document EP 1 564 050 décrit une structure de vehicule automobile comportant les caractéristiques définies dans le préambule de la revendication 1.

L'invention a pour but de limiter davantage les risques d'échappement de l'ouvrant latéral par rapport à la caisse en cas de choc frontal, afin de réduire les risques de lésions des passagers du véhicle.

A cet effet, l'invention a pour objet une structure de véhicule automobile du type connu par EP1564050, **caractérisée en ce que** l'élément rigide forme un prolongement longitudinal du charnon fixe.

Suivant d'autres modes de réalisation, le dispositif comprend une ou plusieurs des caractéristiques suivantes, prise(s) isolément ou suivant toutes les combinaisons techniquement possibles :
- l'élément rigide est une pièce métallique rapportée sur le pied ;
- la pièce est sensiblement plane ;
- le bord de l'élément rigide disposé en saillie hors du pied est recourbé ;
- le bord de l'élément rigide disposé en saillie hors du pied est recourbé vers l'extérieur du véhicule ;
- la caisse comporte une peau d'habitacle, fixée extérieurement au pied, en sandwich entre le pied et l'élément rigide, et la peau d'habitacle comporte une partie transversale qui s'étend dans l'intervalle entre le pied et la doublure ;
- un premier segment défini par la projection orthogonale sur l'axe vertical de la section d'extrémité avant de la frise est inclus dans un deuxième segment défini par la projection orthogonale sur le même axe de la partie d'extrémité en saillie hors du pied dudit élément rigide ;
- le dispositif comporte une charnière reliant l'ouvrant latéral à la caisse, ladite charnière comprenant un charnon fixe, solidaire du pied, et un charnon mobile, solidaire de la doublure et relié au charnon fixe par une articulation, et l'élément rigide est disposé en sandwich entre le pied et le charnon fixe ; et
- le dispositif comporte une charnière reliant l'ouvrant latéral à la caisse, ladite charnière comprenant un charnon fixe, solidaire du pied, et un charnon mobile, solidaire de la doublure et relié au charnon fixe par une articulation, et l'élément rigide forme un prolongement longitudinal du charnon fixe.

L'invention et ses avantages seront mieux compris à la lecture de la description qui va suivre, donnée uniquement à titre d'exemple, faite en référence aux dessins annexés, sur lesquels :
- la figure 1 est une vue partielle en perspective éclatée d'un véhicule automobile,
- la figure 2 est une vue en coupe transversale et de dessus d'un dispositif anti-échappement ne faisant pas partie de l'invention pour l'ouvrant latéral avant droit,
- la figure 3 est une vue de côté du dispositif de la figure 2,
- les figures 4A à 4C sont des vues schématiques en coupe transversale et de dessus du dispositif des figures 2 à 3, lors de phases successives d'un choc frontal,
- la figure 5 est une vue analogue à la figure 2 du dispositif anti-échappement selon l'invention, et
- la figure 6 est une vue en perspective d'une charnière du dispositif de la figure 5.

Dans la suite de la description, les termes "avant", "arrière", "droit", "gauche", "haut", "bas", "longitudinal", "transversal" et "vertical" s'entendent par référence au système d'axe orthogonal usuel des véhicules automobiles représenté sur certaines figures et possédant :
- un axe longitudinal X dirigé de l'arrière vers l'avant,
- un axe transversal Y dirigé de la droite vers la gauche, et
- un axe vertical Z dirigé du bas vers le haut.

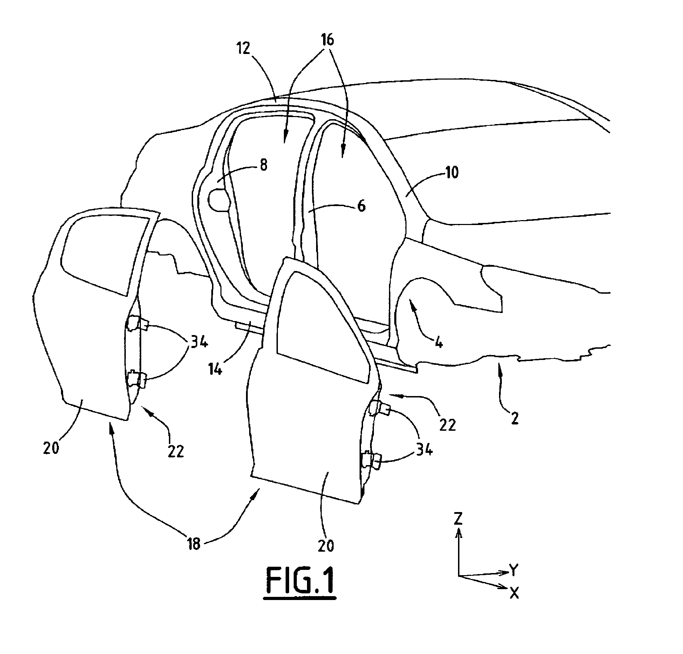

Sur la figure 1, une caisse 2 d'un véhicule automobile comporte, de manière classique et de chaque côté, un pied avant 4, un pied milieu 6 et un pied arrière 8. Les pieds 4, 6, 8 forment chacun une structure en caisson allongée sensiblement verticalement et sont reliés entre eux en partie supérieure par un montant de baie 10 et un arc de pavillon 12, et en partie inférieure par un longeron 14.

Les éléments mentionnés ci-dessus délimitent deux ouvertures 16 destinées à recevoir chacune un ouvrant latéral 18.

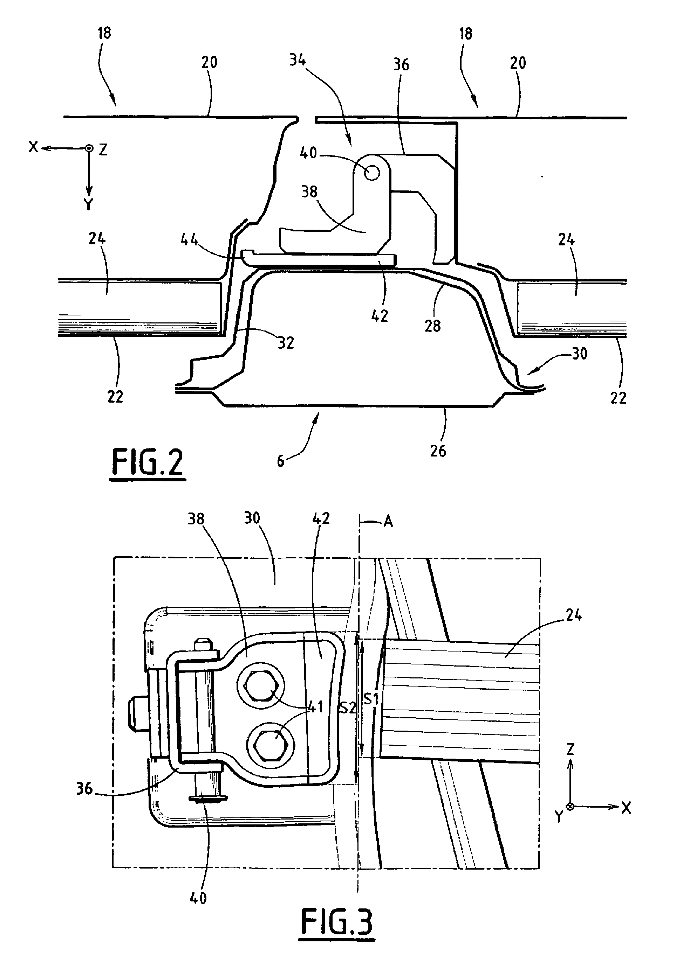

Chaque ouvrant latéral 18 comporte une peau extérieure 20, une doublure 22 fixée intérieurement à la peau 20 et une frise de renfort sensiblement horizontale 24, visible sur la figure 2, fixée intérieurement à la doublure 22 par des points de soudure.

Comme le montre la figure 2, le pied milieu 6 comprend une première demi-coque 26 et une deuxième demi-coque 28, délimitant entre elles la structure en caisson du pied 6. La première demi-coque 26, également appelée doublure de pied milieu, possède une section transversale en U ouverte vers l'extérieur du véhicule. La deuxième demi-coque 28, également appelée renfort de pied milieu, possède une section transversale en U ouverte vers l'intérieur du véhicule. Le renfort de pied 28 est une tôle emboutie d'épaisseur relativement importante. La doublure de pied 26 et le renfort de pied 28 sont soudés entre eux le long de leurs bords.

La caisse 2 comporte une peau d'habitacle 30, fixée extérieurement aux pieds 4, 6, 8, et sur la figure 2, la peau d'habitacle 30 comporte une partie transversale 32 s'étendant dans l'intervalle entre le pied 6 et la doublure 22. La peau d'habitacle 30 est une tôle emboutie d'épaisseur relativement faible.

Chaque ouvrant latéral 18 est relié à la caisse 2 par deux charnières d'articulation 34. Les charnières 34 comportent chacune un charnon mobile 36 et un charnon fixe 38, relié au charnon mobile 36 par un axe d'articulation 40. Le charnon mobile 36 est solidaire de la doublure 22 et le charnon fixe 38 est fixé sur la peau d'habitacle 30 et, à travers celle-ci, au pied 6 par des moyens de fixation 41, visibles sur la figure 3.

Un élément rigide 42 monté en sandwich entre la peau d'habitacle 30 et le charnon fixe 38, est en saillie longitudinalement vers l'avant, s'étendant dans l'intervalle entre la peau d'habitacle 30 et la doublure 22. L'élément rigide 42 est latéralement à l'extérieur de la frise de renfort 24.

Sur la figure 3, en vue de côté, un premier segment S₁ est défini par la projection orthogonale sur un axe vertical A de la section d'extrémité avant de la frise 24. Un deuxième segment S₂ est défini par la projection orthogonale sur le même axe A de la partie d'extrémité arrière de l'élément rigide 42. Le segment S₁ est inclus dans le segment S₂.

L'élément rigide 42 est une pièce métallique sensiblement plane, dont le bord avant 44 est recourbé vers l'extérieur du véhicule.

Le fonctionnement du dispositif anti-échappement va maintenant être décrit à l'aide des figures simplifiées 4A à 4C, où, en particulier, la charnière n'a pas été représentée.

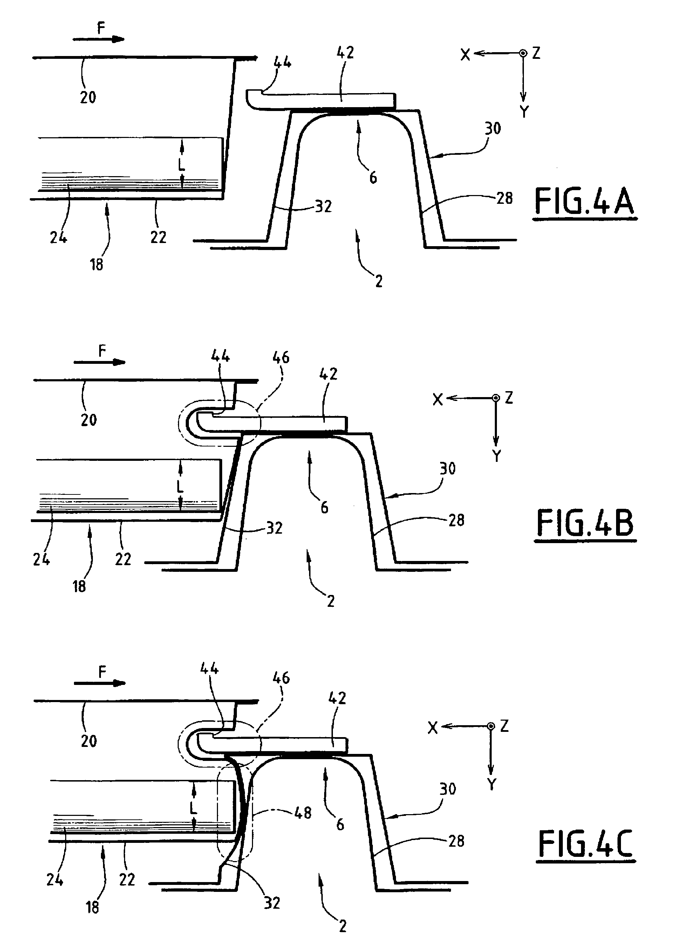

La figure 4A représente le pied milieu 6 droit et l'ouvrant latéral 18 avant droit avant un choc frontal. L'intervalle entre la peau d'habitacle 30 et la doublure 22 n'est pas nul, afin de permettre le déplacement de l'ouvrant 18 entre une position ouverte et une position fermée par rapport à la caisse 2.

Lors d'un choc frontal à vitesse relativement élevée, la caisse 2 du véhicule se comprime et sous l'effet d'efforts longitudinaux l'ouvrant latéral avant 18 se déplace vers l'arrière (flèche F).

Comme représenté sur la figure 4B, l'intervalle entre la peau d'habitacle 30 et la doublure 22 devient alors nul et le bord 44 de l'élément rigide 42 en saillie vers l'avant pénètre dans la doublure 22 dans une zone 46, située latéralement à l'extérieur de la frise de renfort 24. L'élément rigide 42 recouvre alors longitudinalement la frise 24 et empêche celle-ci de s'échapper latéralement.

La courbure du bord avant 44 de l'élément rigide permet d'assurer dans la zone 46 une déformation profonde de la doublure 22 sans traverser celle-ci. La doublure 22 une fois déformée autour de l'élément rigide 42 ne glisse plus par rapport au pied 6. La courbure du bord 44 étant orientée vers l'extérieur du véhicule, la frise 24 est retenue par l'élément rigide 42 pour une distance minimale entre l'extérieur de la frise 24 et l'extérieur du renfort de pied 28 selon la direction transversale.

Lors d'une seconde phase du choc frontal représentée sur la figure 4C, l'ouvrant 18 se déplace davantage vers l'arrière et la frise 24 presse alors la doublure 22 et la peau d'habitacle 30 contre le pied 6 dans une zone 48, située latéralement à l'intérieur de l'élément rigide 42. Une déformation de la peau d'habitacle 30 dans la zone 48 est possible de par l'épaisseur relativement faible de la peau d'habitacle 30 et l'épaisseur relativement importante du renfort de pied 28.

La doublure poinçonnée 22 est mise en tension, donc raidie, sur toute la largeur d'appui L de la frise 24, ce qui permet d'obtenir une meilleure répartition des efforts longitudinaux sur toute la largeur L de la frise 24.

Le mouvement de rotation de la frise 24 autour d'un axe vertical est fortement limité. La déformation dans la zone 48 participe donc également à la rétention de l'ouvrant 18, notamment de la frise 24.

Ainsi, lors d'un choc frontal à vitesse élevée, le dispositif selon l'invention permet de limiter efficacement le risque d'échappement de l'ouvrant latéral 18 par rapport à la caisse 2, et réduit ainsi les risques de lésions pour les passagers du véhicule.

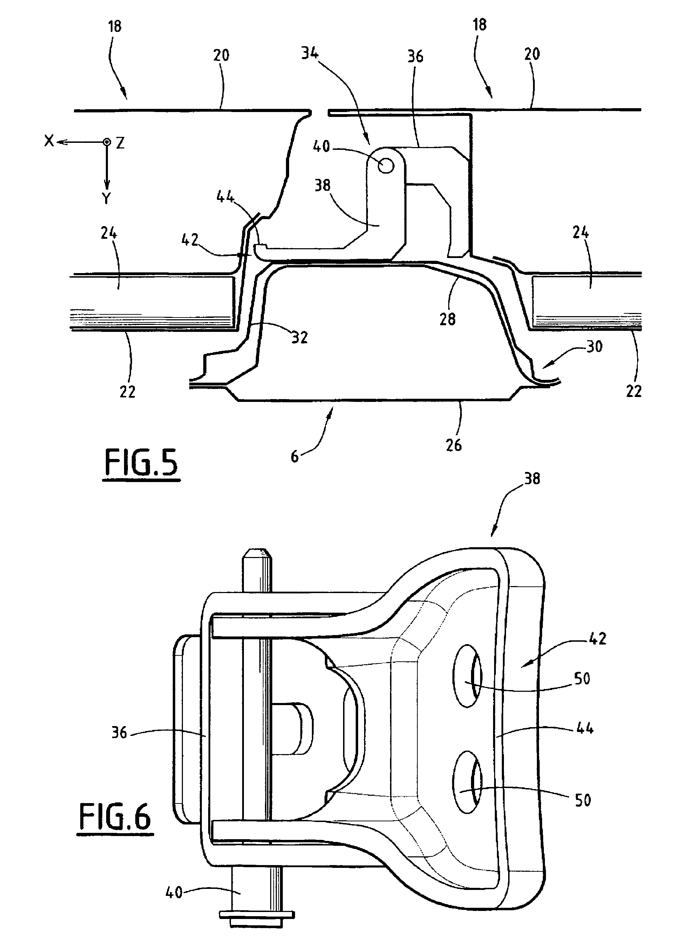

Les figures 5 et 6 illustrent un mode de réalisation, selon l'invention pour lequel les éléments analogues au mode de réalisation décrit précédemment sont repérés par des références identiques. L'élément rigide 42 est un prolongement vers l'avant du charnon fixe 38 sur lequel est monté à rotation un ouvrant latéral arrière. Le prolongement 42 est en saillie longitudinalement vers l'avant dans l'intervalle entre la peau d'habitacle 30 et la doublure 22. Le bord avant 44 du prolongement 42 est également recourbé vers l'extérieur du véhicule. Des trous 50 du charnon 38 sont destinés au passage des moyens de fixation 41.

Le fonctionnement de ce mode de réalisation est identique à celui du dispositif anti-échappement décrit précédemment à l'aide des figures 4A à 4C, et n'est donc pas décrit à nouveau.

En variante ou en supplément, le dispositif selon l'invention est encore prévu pour les ouvrants latéraux 18 avant, mais l'élément rigide 42 s'étend dans l'intervalle entre le pied avant 4 et la doublure 22 de l'ouvrant latéral avant.

En variante ou en supplément, le dispositif selon l'invention peut être prévu pour les ouvrants latéraux 18 arrière.

## Revendications

1. Structure de véhicule automobile, comprenant un dispositif anti-échappement d'un ouvrant latéral (18) par rapport à la caisse (2) dudit véhicule automobile en cas de choc frontal, ladite caisse (2) comprenant un pied (4, 6, 8), qui forme une structure en caisson allongée sensiblement verticalement, et une peau d'habitacle (30) fixée extérieurement au pied, ledit ouvrant latéral (18) comprenant une peau extérieure (20), une doublure (22) fixée intérieurement à la peau (20) et une frise de renfort (24) sensiblement horizontale, et étant apte à se déplacer entre une position ouverte et une position fermée par rapport à la caisse (2), le pied (4, 6, 8) comportant un élément rigide (42) en saillie longitudinalement hors du pied, s'étendant dans l'intervalle entre le pied (4, 6, 8) et la doublure (22), latéralement à l'extérieur par rapport à la frise (24), et horizontalement au regard de la frise (24), ledit dispositif anti-échappement comportant une charnière (34) reliant l'ouvrant latéral (18) à la caisse (2), ladite charnière (34) comprenant un charnon fixe (38), solidaire du pied (4, 6, 8), et un charnon mobile (36), solidaire de la doublure (22) et relié au charnon fixe (38) par une articulation (40), l'élément rigide (42) étant fixé au pied (4, 6, 8) par des moyens de fixation de la charnière (34) sur le pied, **caractérisé en ce que** l'élément rigide 42 est un prolongement longitudinal du charnon fixe (38).

2. Structure de véhicule automobile selon la revendication 1, **caractérisé en ce que** l'élément rigide (42) est une pièce métallique rapportée sur le pied (4, 6, 8).

3. Structure de véhicule automobile selon la revendication 2, **caractérisé en ce que** la pièce (42) est sensiblement plane.

4. Structure de véhicule automobile selon l'une quelconque des revendications précédentes, **caractérisé en ce que** le bord (44) de l'élément rigide (42) disposé en saillie hors du pied (4, 6, 8) est recourbé.

5. Structure de véhicule automobile selon la revendication 4, **caractérisé en ce que** le bord (44) de l'élément rigide (42) disposé en saillie hors du pied (4, 6, 8) est recourbé vers l'extérieur du véhicule.

6. Structure de véhicule automobile selon l'une quelconque des revendications précédentes, **caractérisé en ce que** la caisse (2) comporte une peau d'habitacle (30), fixée extérieurement au pied (4, 6, 8), en sandwich entre le pied (4, 6, 8) et l'élément rigide (42), et **en ce que** la peau d'habitacle (30) comporte une partie transversale qui s'étend dans l'intervalle entre le pied (4, 6, 8) et la doublure (22).

7. Structure de véhicule automobile selon l'une quelconque des revendications précédentes, **caractérisé en ce qu'**un premier segment (S₁) défini par la projection orthogonale sur l'axe vertical (A) de la section d'extrémité avant de la frise (24) est inclus dans un deuxième segment (S₂) défini par la projection orthogonale sur le même axe (A) de la partie d'extrémité en saillie hors du pied (4, 6, 8) dudit élément rigide (42).

## Claims

1. Motor vehicle structure, comprising an anti-escape device for preventing escape of a side door leaf (18) from the shell (2) of said motor vehicle in the event of a frontal impact, said shell (2) comprising a door pillar (4, 6, 8), which forms a substantially vertically elongated box structure, and a passenger compartment skin (30) fixed externally to the door pillar, said side door leaf (18) comprising an external skin (20), a liner (22) fixed internally to the skin (20) and a substantially horizontal reinforcing rail (24), and being capable of moving between an open position and a closed position relative to the shell (2), the door pillar (4, 6, 8) comprising a rigid element (42) which projects longitudinally beyond the door pillar and extends in the gap between the door pillar (4, 6, 8) and the liner (22), laterally to the exterior relative to the rail (24) and horizontally vis-à-vis the rail (24), said anti-escape device comprising a hinge (34) which connects the side door leaf (18) to the shell (2), said hinge (34) comprising a stationary knuckle (38) attached to the door pillar (4, 6, 8) and a movable knuckle (36) attached to the liner (22) and connected to the stationary knuckle (38) by an articulation (40), the rigid element (42) being fixed to the door pillar (4, 6, 8) by means for fixing the hinge (34) to the door pillar, **characterised in that** the rigid element (42) is a longitudinal extension of the stationary knuckle (38).

2. Motor vehicle structure according to claim 1, **characterised in that** the rigid element (42) is a metal part attached to the door pillar (4, 6, 8).

3. Motor vehicle structure according to claim 2, **characterised in that** the part (42) is substantially planar.

4. Motor vehicle structure according to any one of the preceding claims, **characterised in that** the edge (44) of the rigid element (42) disposed so as to project beyond the door pillar (4, 6, 8) is bent.

5. Motor vehicle structure according to claim 4, **characterised in that** the edge (44) of the rigid element (42) disposed so as to project beyond the door pillar (4, 6, 8) is bent towards the exterior of the vehicle.

6. Motor vehicle structure according to any one of the preceding claims, **characterised in that** the shell (2) comprises a passenger compartment skin (30) which is fixed externally to the door pillar (4, 6, 8) and sandwiched between the door pillar (4, 6, 8) and the rigid element (42), and **in that** the passenger compartment skin (30) comprises a transverse portion which extends into the gap between the door pillar (4, 6, 8) and the liner (22).

7. Motor vehicle structure according to any one of the preceding claims, **characterised in that** a first segment (S₁) defined by the orthogonal projection onto the vertical axis (A) of the front end section of the rail (24) is included in a second segment (S₂) defined by the orthogonal projection onto the same axis (A) of the end portion of said rigid element (42) projecting beyond the door pillar (4, 6, 8).

## Patentansprüche

1. Kraftfahrzeugstruktur, umfassend eine Anti-Auslösungsvorrichtung eines seitlichen Öffnungselementes (18) in Bezug auf die Karosserie (2) des Kraftfahrzeuges bei einem Frontalaufprall, wobei die Karosserie (2) einen Pfeiler (4, 6, 8), der eine längliche, im Wesentlichen vertikale Kastenstruktur bildet, und eine außen an dem Pfeiler befestigte Fahrgastzellenhaut (30) umfasst, wobei das seitliche Öffnungselement (18) eine Außenhaut (20), eine innen an der Haut (20) befestigte Verkleidung (22) und eine im Wesentlichen horizontale Verstärkungsleiste (24) umfasst und sich in Bezug auf die Karosserie (2) zwischen einer offenen Stellung und einer geschlossenen Stellung bewegen kann, wobei der Pfeiler (4, 6, 8) ein außerhalb des Pfeilers in Längsrichtung vorstehendes steifes Element (42) umfasst, das sich in dem Zwischenraum zwischen dem Pfeiler (4, 6, 8) und der Verkleidung (22) in Bezug auf die Leiste (24) seitlich nach außen und in Bezug auf die Verstärkungsleiste (24) horizontal erstreckt, wobei die Anti-Auslösungsvorrichtung ein Scharnier (34) umfasst, das das seitliche Öffnungselement (18) mit der Karosserie (2) verbindet, wobei das Scharnier (34) ein feststehendes Scharnierteil (38), das mit dem Pfeiler (4, 6, 8) fest verbunden ist, und ein bewegliches Scharnierteil (36) umfasst, das mit der Verkleidung (22) fest verbunden und durch ein Gelenk (40) mit dem feststehenden Scharnierteil (38) verbunden ist, wobei das steife Element (42) an dem Pfeiler (4, 6, 8) durch Befestigungsmittel des Scharniers (34) auf dem Pfeiler befestigt ist, **dadurch gekennzeichnet, dass** das steife Element (42) eine Längsfortsatz des feststehenden Scharnierteils (38) ist.

2. Kraftfahrzeugstruktur nach Anspruch 1, **dadurch gekennzeichnet, dass** das steife Element (42) ein an dem Pfeiler (4, 6, 8) angebrachtes Metallteil ist.

3. Kraftfahrzeugstruktur nach Anspruch 2, **dadurch gekennzeichnet, dass** das Teil (42) im Wesentlichen eben ist.

4. Kraftfahrzeugstruktur nach einem der vorhergehenden Ansprüche, **dadurch gekennzeichnet, dass** der Rand (44) des außerhalb des Pfeilers (4, 6, 8) vorstehend angeordneten steifen Elementes (42) umgebogen ist.

5. Kraftfahrzeugstruktur nach Anspruch 4, **dadurch gekennzeichnet, dass** der Rand (44) des außerhalb des Pfeilers (4, 6, 8) vorstehend angeordneten steifen Elementes (42) zur Außenseite des Fahrzeugs hin umgebogen ist.

6. Kraftfahrzeugstruktur nach einem der vorhergehenden Ansprüche, **dadurch gekennzeichnet, dass** die Karosserie (2) eine außen an dem Pfeiler (4, 6, 8) befestigte Fahrgastzellenhaut (30) umfasst, die zwischen dem Pfeiler (4, 6, 8) und dem steifen Element (42) eingeschoben ist, und dass die Fahrgastzellenhaut (30) einen Querabschnitt umfasst, der sich in dem Zwischenraum zwischen dem Pfeiler (4, 6, 8) und der Verkleidung (22) erstreckt.

7. Kraftfahrzeugstruktur nach einem der vorhergehenden Ansprüche, **dadurch gekennzeichnet, dass** ein erstes Segment (S₁), das von der orthogonalen Projektion auf die Vertikalachse (A) des Endabschnitts vor der Leiste (24) definiert wird, in einem zweiten Segment (S₂), das von der orthogonalen Projektion auf dieselbe Achse (A) des außerhalb des Pfeilers (4, 6, 8) vorstehenden Endabschnitts des steifen Elementes (42) definiert wird, enthalten ist.
